# EUROPÄISCHE PATENTSCHRIFT

(11) **EP 2 512 889 B1**
(45) Veröffentlichungstag und Bekanntmachung des Hinweises auf die Patenterteilung: **06.08.2014**
(21) Anmeldenummer: 10798536.8
(22) Anmeldetag: 16.12.2010
(51) Int. Cl.: B60T 17/02, F04B 43/02, F04B 45/04, F04B 53/14

(54) **MOTOR-PUMPENAGGREGAT**
MOTOR PUMP
POMPE MOTEUR

(30) Priorität: 18.12.2009 DE 102009054941
(43) Veröffentlichungstag der Anmeldung: 24.10.2012
(73) Patentinhaber: Continental Teves AG & Co. oHG, 60488 Frankfurt (DE)
(72) Erfinder: RÜFFER, Manfred, 65843 Sulzbach (DE); BACHER, Jens, 60487 Frankfurt am Main (DE); KREH, Heinrich, 61197 Florstadt (DE); MILISIC, Lazar, 65779 Kelkheim. (DE); JÜRGING, Michael, 65779 Kelkheim (DE); NIEPENBERG, Marcel, 64521 Groß-Gerau (DE); GONZALEZ, Jose, 32549 Bad Oeynhausen (DE); KÖNIG, Harald, 61239 Ober-Mörlen (DE)
(86) Internationale Anmeldenummer: PCT/EP2010/069892
(87) Internationale Veröffentlichungsnummer: WO 2011/073318

(56) Entgegenhaltungen:
- DE-A1- 3 529 978
- DE-A1-102007 005 223
- DE-A1-102008 005 820
- DE-A1-102009 054 502
- US-A1- 2003 103 843

## Beschreibung

Die Erfindung betrifft ein Motor-Pumpenaggregat gemäß dem Oberbegriff des Patentanspruchs 1, oder gemäß dem Oberbegriff des Patentanspruchs 4.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Eine gattungsgemäßes Motor-Pumpenaggregat ist beispielsweise aus der DE 10 2007 005 223 A1 bekannt. Das bekannte Motor-Pumpenaggregat weist eine Membraneinheit mit einer Arbeitsmembran auf, welche mit einem Stößel fest verbunden ist. Der Stößel seinerseits ist durch Verschweißen oder Verschrauben an einer Pleuelstange befestigt.

Es bestehen stets Bestrebungen, bekannte Motor-Pumpenaggregate zu verbessern. Daher ist es Aufgabe der vorliegenden Erfindung, ein geräuscharmes Motor-Pumpenaggregat bereitzustellen, welches im Vergleich zu dem bekannten, gattungsgemäßen Aggregat kostengünstiger ist und einen reduzierten Montageaufwand erfordert.

Die Aufgabe wird erfindungsgemäß dadurch gelöst, dass die Pleuelstangen aus Kunststoff vorgesehen sind, wobei jeweils ein Stößel und ein Lager mit dem Werkstoff der Pleuelstange umspritzt sind. Hierdurch entsteht eine kostengünstige und gewichtsoptimierte Membraneinheit. Die Bauteilanzahl kann verringert und die Montage vereinfacht werden.

Die Aufgabe wird ebenso erfindungsgemäß dadurch gelöst, dass die Pleuelstangen jeweils mit dem Stößel einteilig ausgebildet und als Sinterbauteile vorgesehen sind. Vorteilhaft hierbei ist, dass die Pleuelstangen einfach und kostengünstig hergestellt werden können. Zudem kann die Bauteilanzahl verringert werden und die Montage vereinfacht sich.

Weitere Merkmale, Vorteile und Anwendungsmöglichkeiten der Erfindung gehen aus der nachfolgenden Beschreibung von Ausführungsbeispielen sowie anhand der Zeichnung hervor.

Es zeigt:
- Figur 1: ein bekanntes Motor-Pumpenaggregat in räumlicher Darstellung;
- Figur 2: das bekannte Motor-Pumpenaggregat gemäß Fig.1 im Längsschnitt;
- Figur 3: eine Membraneinheit eines ersten Ausführungsbeispiels eines erfindungsgemäßen Motor-Pumpenaggregates;
- Figur 4: eine Membraneinheit eines zweiten Ausführungsbeispiels eines erfindungsgemäßen Motor-Pumpenaggregates und
- Figur 5: ein erfindungsgemäßes Motor-Pumpenaggregat in räumlicher Darstellung;
- Figur 6: eine weitere Ansicht des Motor-Pumpenaggregat gemäß Fig. 5 in räumlicher Darstellung;
- Figur 7: einen Ausschnitt eines weiteren Ausführungsbeispiels eines erfindungsgemäßen Motor-Pumpenaggregates und
- Figur 8: den Ausschnitt gemäß Fig. 7 in räumlicher Darstellung.

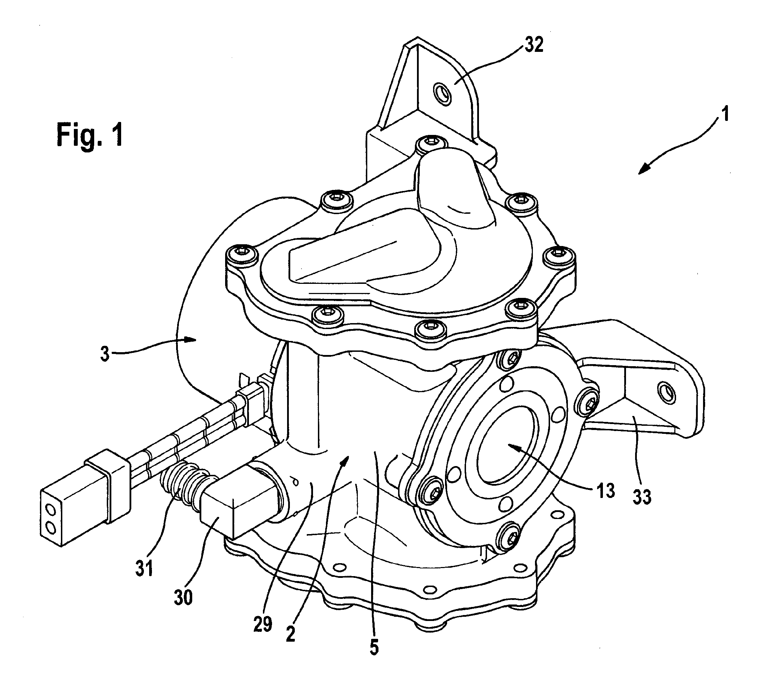

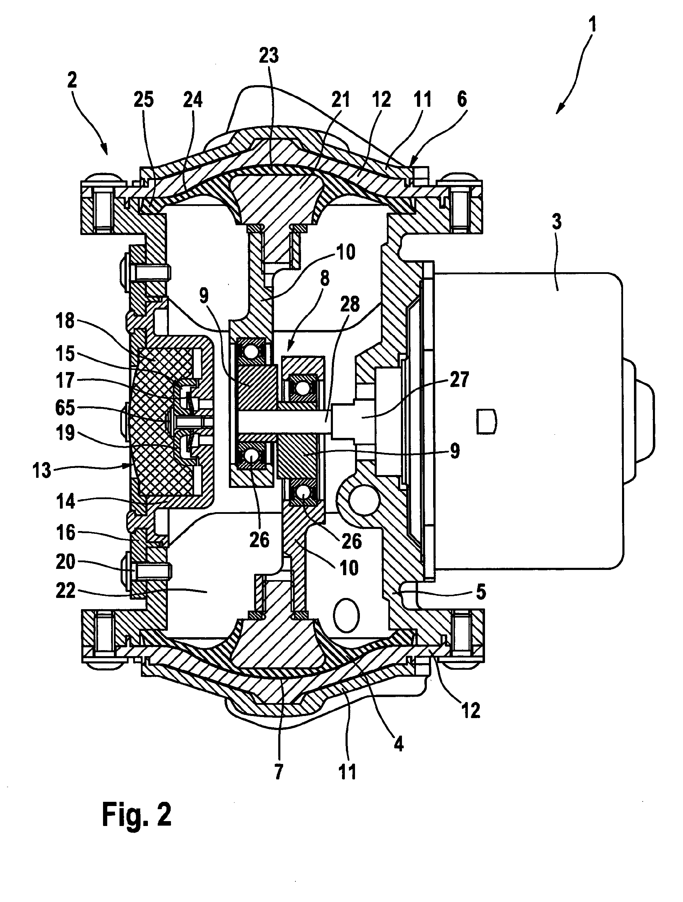

Fig. 1 und 2 zeigen ein bekanntes Motor-Pumpenaggregats 1 gemäß DE 10 2007 005 223 A1 in räumlicher und geschnittener Darstellung, welches eine Pumpe 2 mit einem Pumpengehäuse 5 und einen die Pumpe 2 antreibenden elektrischen Motor 3 umfasst, wobei der Motor 3 beispielsweise als Gleichstrommotor ausgebildet sein kann.

Die Pumpe 2 ist als Doppelmembranpumpe mit zwei gegenüberliegenden Arbeitsmembranen 4 vorgesehen, welche jeweils zwischen dem Pumpengehäuse 5 und einem Arbeitsraumdeckel 6 eingespannt ist und dadurch einen Arbeitsraum 7 begrenzt. Die Arbeitsmembrane 4 sind mittels eines Kurbelantriebs 8 gegensinnig bewegbar, welcher je Arbeitsmembran 4 einen Exzenter 9 und eine Pleuelstange 10 umfasst. Der Arbeitsraumdeckel 6 weist einen Oberdeckel 11 sowie einen Unterdeckel 12 auf, die luftdicht miteinander verschweißt, vernietet bzw. verschraubt sind.

In den Arbeitsraumdeckeln 6 sind nicht gezeigte Einlass- und Auslassventile vorgesehen. Von den Auslassventilen wird die ausgestoßene Luft über jeweils einen Auslasskanal in den Arbeitsraumdeckeln 6 zu einem Auslasskanal im Pumpengehäuse 5 geleitet, die luftdicht mittels eines Dichtelements verbunden sind. Die beiden Auslasskanäle im Pumpengehäuse 5 münden in einen Innenraum 22 des Pumpengehäuses 5, dem so genannten Kurbelraum, welcher den Kurbelantrieb 8 umgibt.

Eine in dem Pumpengehäuse 5 vorgesehene Luftauslasseinheit 13 ermöglicht ein geräuscharmes Ausblasen der Luft aus dem Innenraum 22, welcher so als Schalldämpfungsraum dient. Weiter umfasst die Luftauslasseinheit 13 ein Rückschlagventil 15 mit einem ein- oder mehrteiligen Ventilkörper 17, das ein Zurückströmen von bereits ausgestoßener Luft sowie das Eindringen flüssiger oder gasförmiger Substanzen in den Innenraum 22 verhindert.

Zusätzlich wird der Luftschall beim Austreten der Luft aus dem Innenraum 22 dadurch vermindert, dass die Luftauslasseinheit 13 einen, in einem Filtergehäuse 14 angeordneten Filter 18 aufweist, durch welchen die Luft in die Atmosphäre austritt. Weiter umfasst die Luftauslasseinheit 13 einen Luftauslassdeckel 16, eine Luftauslassverschlusskappe 19 sowie den Ventilkörper 17 und kann als vormontierbare Baugruppe vorgesehen werden. Der Luftauslassdeckel 16, die Luftauslassverschlusskappe 19 und das Filtergehäuse 14 sind jeweils mit Schraubelementen 20,65 befestigt. Wie ersichtlich ist, ist das Filtergehäuse 14 mit dem Luftauslassdeckel 16 vernietet. Zur Schalldämpfung können weitere Mittel vorgesehen sein, welche vorteilhafterweise in die Baugruppe Luftauslasseinheit 13 integriert sind.

Fig. 2 ist weiter zu entnehmen, dass die Arbeitsmembran 4 den Arbeitsraum 7 vom Kurbelraum 22 trennt und fest mit einem Stößel 21 verbunden ist, wobei der nicht deformierbare Stößel 21 von dem elastisch deformierbaren Werkstoff der Arbeitsmembran 4 umspritzt sein kann. Dadurch entsteht in der Umgebung des Stößels 21 ein schwer deformierbarer Abschnitt 23 im Zentrum der Arbeitsmembran 4, der nach außen in den leicht deformierbaren Abschnitt 24 der Arbeitsmembran 4 übergeht, wobei dieser wiederum nach außen in einen Membranwulst 25 übergeht, der mit dem Pumpengehäuse 5 fest und luftdicht verbunden ist. Der Stößel 21 kann entweder mittels einer Schweiß- oder einer Gewindeverbindung fest mit der Pleuelstange 10 verbunden sein. Die Pleuelstangen 10 sind mittels

Kugellagern 26 auf den Exzentern 9 beweglich gelagert. Die Arbeitsmembran 4 mit dem fest verbundenen Stößel 21 bildet mit der Pleuelstange 10 und dem Kugellager 26 eine Membraneinheit.

Eine Motorwelle 27 dient bei diesem Ausführungsbeispiel gleichzeitig als Exzenterwelle 28, welche den Kurbelantrieb 8 mit den Exzentern 9 und den Pleuelstangen 11 trägt.

Am Pumpegehäuse 5 ist ein in Fig. 1 gezeigter Anschluss 29 mit einem darin abdichtend befestigen Adapter 30 vorgesehen, über den ein angeschlossener Bremskraftverstärker evakuiert wird und an dessen Adapterabgang 31 ein nicht gezeigter Vakuumschlauch befestigt wird.

Der Anschluss 29 mündet in eine nicht dargestellte Gehäusebohrung, die in zwei im Pumpengehäuse 5 ausgebildete Kanäle verzweigt, die zu den beiden Arbeitraumdeckeln 6 führen. Dadurch ist es möglich, die Arbeitsraumdeckel 6 für beide Seiten der Pumpe 2 gleich auszugestalten. Auf der gegenüberliegenden Seite des Pumpengehäuses 5 ist ein zweiter Anschluss 29 vorgesehen. Damit ist es möglich, je nach Kundenwunsch und Einbauverhältnisse des Motor-Pumpenaggregates 1 den Adapter 30 entweder auf der einen oder der gegenüberliegenden Seite anzuschließen, wobei der freie Anschluss 29 mit einem Stopfen dicht verschlossen werden muss.

Zur Befestigung des Motor-Pumpenaggregates 1 im Fahrzeug sind mehrere Befestigungselemente 32,33 an dem Pumpengehäuse 5 befestigt.

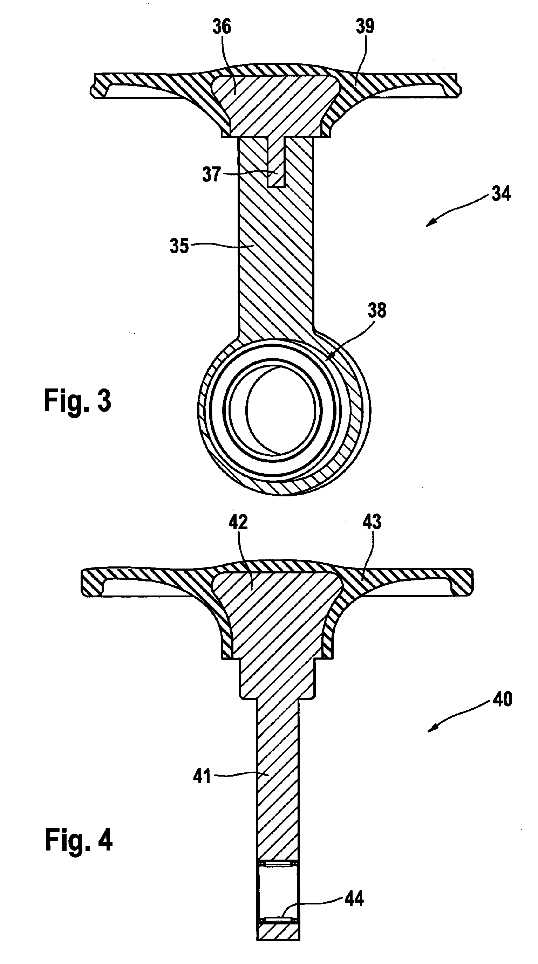

Den nachfolgend beschriebenen Fig. 3 bis 7 sind Ausführungsbeispiele von erfindungsgemäßen Motor-Pumpenaggregaten zu entnehmen. Deren Funktion und grundsätzlicher Aufbau unterscheidet sich zu dem bekannten Motor-Pumpenaggregat nicht, so dass lediglich auf die erfindungswesentlichen Unterschiede eingegangen wird.

Fig. 3 zeigt eine Membraneinheit 34 eines ersten Ausführungsbeispiels. Um ein geräuscharmes Motor-Pumpenaggregat bereitzustellen, welches im Vergleich zu dem bekannten, Aggregat 1 kostengünstiger ist und einen reduzierten Montageaufwand erfordert, sind Pleuelstangen 35 aus Kunststoff vorgesehen. Als geeignete Kunststoffe können beispielsweise Duroplaste Verwendung finden. Dabei sind ein Stößel 36, d.h. ein Vorsprung 37 des Stößels 36 und ein Kugellager 38 mit dem Werkstoff der Pleuelstange 35 umspritzt. Hierdurch wird eine gewichtsoptimierte Membraneinheit 34 ermöglicht und die Montage kann wesentlich vereinfacht werden.

Die Herstellung der Arbeitsmembran 4 erfolgt durch Formpressen, wobei der Werkstoff der Arbeitsmembran 4 um den Stößel 36 herum in Form gepresst wird.

Die Arbeitsmembran 4 mit Stößel 36 und das Kugellager 38 werden zur Herstellung der Membraneinheit 34 in ein Werkstück eingelegt und mit dem Werkstoff der Pleuelstange 35 formschlüssig umspritzt. Neben den bereits erwähnten Vorteilen bietet die Membraneinheit 34 durch die beschriebene Herstellung ein verbessertes Schwingungsverhalten.

Aus Fig. 4 ist eine Membraneinheit 40 einer alternativen Ausführungsform zu entnehmen. Um ein geräuscharmes Motor-Pumpenaggregat bereitzustellen, welches im Vergleich zu dem bekannten, Aggregat 1 kostengünstiger ist und einen reduzierten Montageaufwand erfordert, ist hierbei vorgesehen, dass eine Pleuelstange 41 mit einem Stößel 42 einteilig ausgebildet und als Sinterbauteil vorgesehen ist. Diese Ausgestaltung erlaubt das Einpressen eines kostengünstigen Nadellagers 44. Eine Arbeitsmembran 43 ist beispielsweise durch Umspritzen der Pleuelstangen-Stößel-Einheit mit dieser fest verbunden.

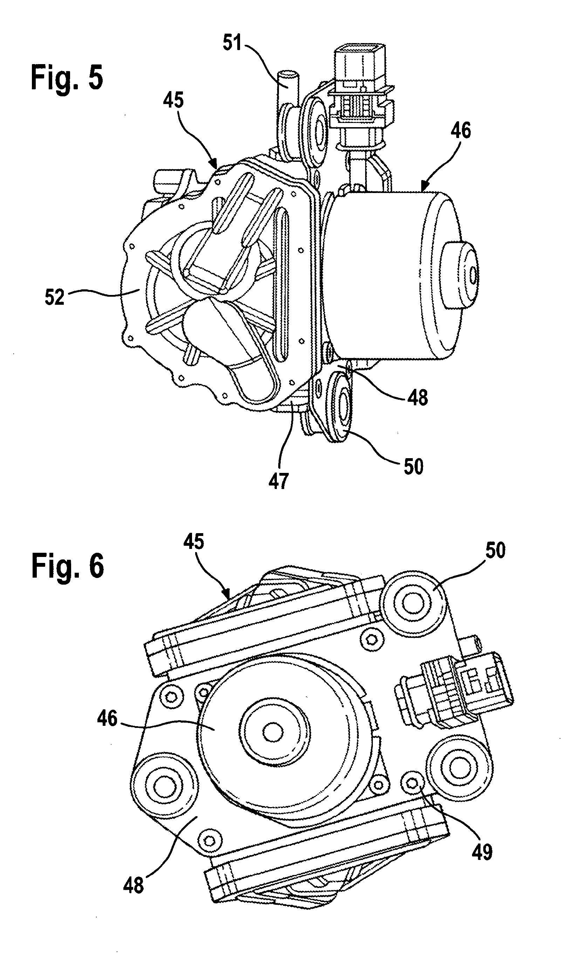

In den Fig. 5 und 6 ist ein Motor-Pumpenaggregat mit einer Pumpe 45 und einem Motor 46 dargestellt, in welchem die vorstehend beschriebenen Membraneinheiten 34,40 Verwendung finden können.

Ein Pumpengehäuse 47 der Pumpe 45 ist aus Kunststoff vorgesehen, wodurch eine kostengünstige Herstellung ermöglicht wird. Wie den Fig. 5 und 6 entnommen werden kann, ist zwischen dem Motor 46 und dem Pumpengehäuse 47 ein Motorblech 48 angeordnet, welches an einer Motorflanschseite des Pumpengehäuses 47 befestigt ist und das vom Motor 46 abgegebene EMV-Strahlen abhält.

Die Befestigung des Motors 46 und des Motorbleches 48 am Pumpengehäuse 47 erfolgt mittels Schraubelementen 49, welche direkt ins Pumpengehäuse 47 eingeschraubt werden.

Zur Befestigung des Motor-Pumpenaggregates im Fahrzeug sind im Motorblech 48 hülsenförmige Halteelemente 50 integriert, so dass eine Anbringung von separaten Halteelementen am Pumpengehäuse 47 entfallen kann.

Das Motor-Pumpenaggregat kann, wie vorstehend zum bekannten Aggregat beschrieben wurde, zwei Anschlüsse 51 zum Verbinden der Pumpe 45 mit dem Bremskraftverstärker aufweisen, welche in Gehäusebohrungen münden, die sich jeweils in zwei im Pumpengehäuse 5 ausgebildete Kanäle verzweigen, die zu beiden Arbeitraumdeckeln 52 führen, wodurch es möglich ist, die Arbeitsraumdeckel 52 für beide Seiten der Pumpe 45 gleich auszugestalten.

Auf der gegenüberliegenden Seite des Pumpengehäuses 5 ist dann ein zweiter Anschluss 51 vorgesehen. Damit ist es möglich, je nach Kundenwunsch und Einbauverhältnisse des Motor-Pumpenaggregates den Bremskraftverstärker entweder auf der einen oder der gegenüberliegenden Seite anzuschließen. In dem freien Anschluss 51 kann ein nicht gezeigter Vakuumsensor abgedichtet angeordnet werden, um das von der Pumpe 45 erzeugte Vakuum zu messen. Diese Information kann beispielsweise einer Steuer- und Regelungseinheit zur weiteren Auswertung übermittelt werden.

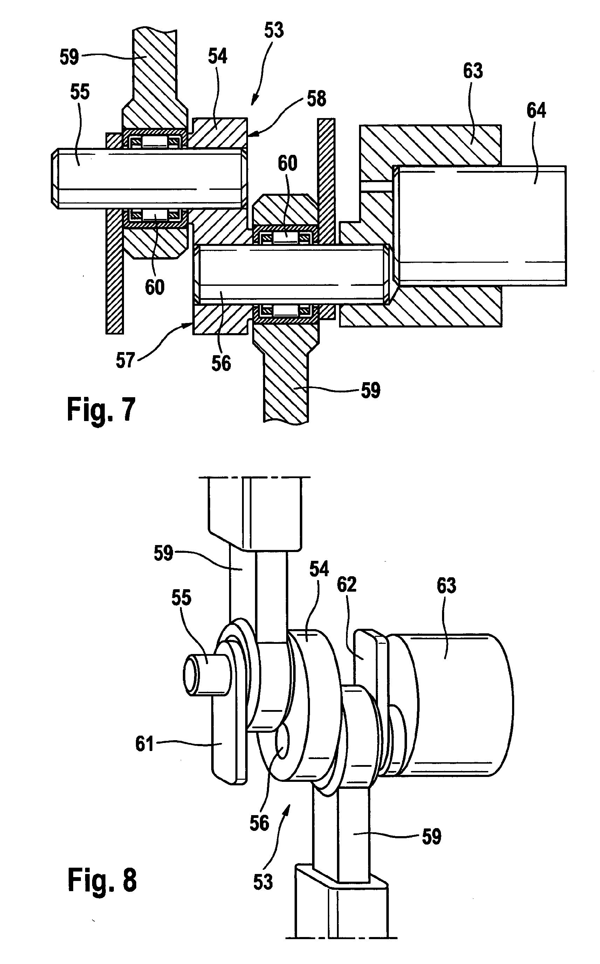

Den Fig. 7 und 8 ist ein Ausschnitt eines weiteren Ausführungsbeispiels zu entnehmen. Die teilweise geschnittenen Ausschnitte zeigen jeweils einen Kurbelantrieb 53. Im Unterschied zu dem gemäß Fig. 2 beschriebenen, bekannten Kurbelantrieb 8 weist der Kurbelantrieb 53 einen scheibenförmigen Halter 54 sowie zwei an dem Halter 54 befestigte Wellen 55,56 auf. Wie ersichtlich ist, sind die beiden Wellen 55,56 an gegenüberliegenden Stirnflächen 57,58 des Halters 54 sowie um 180° versetzt zueinander angeordnet. Pleuelstangen 59 sind mittels Lagern 60 auf den Wellen 55,56 drehbar gelagert, wobei die Lager 60 kostengünstig als Nadellager vorgesehen sind. Durch diesen Aufbau des Kurbelantriebs 53 können die vorstehend beschriebenen Exzenter 9 gänzlich entfallen. Ferner können in einfacher Weise Wuchtgewichte 61,62 zur Schwingungsoptimierung auf die Wellen 55,56 angeordnet werden.

Die Welle 56 ist mittels eines Verbindungselementes 63 mit einer Motorwelle 64 drehbar verbunden.

Als Membraneinheiten können hierbei die oben beschriebenen Membraneinheiten 34,40 vorgesehen sein. Es ist jedoch auch möglich, dass der gezeigte Kurbelantrieb 53 in anderen, nicht beschriebenen Motor-Pumpenaggregaten Verwendung findet.

### Bezugszeichenliste

- 1: Motor-Pumpenaggregat
- 2: Pumpe
- 3: Motor
- 4: Arbeitsmembran
- 5: Pumpengehäuse
- 6: Arbeitsraumdeckel
- 7: Arbeitsraum
- 8: Kurbelantrieb
- 9: Exzenter
- 10: Pleuelstange
- 11: Oberdeckel
- 12: Unterdeckel
- 13: Luftauslasseinheit
- 14: Filtergehäuse
- 15: Rückschlagventil
- 16: Luftauslassdeckel
- 17: Ventilkörper
- 18: Filter
- 19: Luftauslassverschlusskappe
- 20: Schraubelement
- 21: Stößel
- 22: Innenraum
- 23: Abschnitt
- 24: Abschnitt
- 25: Membranwulst
- 26: Kugellager
- 27: Motorwelle
- 28: Exzenterwelle
- 29: Anschluss
- 30: Adapter
- 31: Adapterabgang
- 32: Befestigungselement
- 33: Befestigungselement
- 34: Membraneinheit
- 35: Pleuelstange
- 36: Stößel
- 37: Vorsprung
- 38: Kugellager
- 39: Arbeitsmembran
- 40: Membraneinheit
- 41: Pleuelstange
- 42: Stößel
- 43: Arbeitsmembran
- 44: Nadellager
- 45: Pumpe
- 46: Motor
- 47: Pumpengehäuse
- 48: Motorblech
- 49: Schraubelement
- 50: Halteelement
- 51: Anschluss
- 52: Arbeitsraumdeckel
- 53: Kurbelantrieb
- 54: Halter
- 55: Welle
- 56: Welle
- 57: Stirnfläche
- 58: Stirnfläche
- 59: Pleuelstange
- 60: Lager
- 61: Wuchtgewicht
- 62: Wuchtgewicht
- 63: Verbindungselement
- 64: Motorwelle

## Patentansprüche

1. Motor-Pumpenaggregat, insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Pumpe (45) und einen die Pumpe (45) antreibenden elektrischen Motor (46), wobei die Pumpe (46) als Doppelmembranpumpe mit zwei gegenüberliegenden Arbeitsmembranen (39) vorgesehen ist, welche jeweils zwischen einem Pumpengehäuse (47) und einem Arbeitsraumdeckel (52) eingespannt ist und dadurch einen Arbeitsraum begrenzt und welche mittels eines Pleuelstangen (35,59) und Lager (38,60) aufweisenden Kurbelantriebs (53) bewegbar sind, wobei die Arbeitsmembran (39) mit einem Stößel (36) fest verbindbar ist und mit der Pleuelstange (35,59) jeweils eine Membraneinheit (34) bildet, **dadurch gekennzeichnet, dass** die Pleuelstangen (35) aus Kunststoff vorgesehen sind, wobei jeweils ein Stößel (36) und ein Lager (38) mit dem Werkstoff der Pleuelstange (35) umspritzt sind.

2. Motor-Pumpenaggregat nach Anspruch 1, **dadurch gekennzeichnet, dass** die Pleuelstange (35,59) aus einem Duroplast vorgesehen ist.

3. Motor-Pumpenaggregat nach Anspruch 1 oder 2, **dadurch gekennzeichnet, dass** die Herstellung der Arbeitsmembran (39,59) durch Formpressen erfolgt.

4. Motor-Pumpenaggregat, insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Pumpe (45) und einen die Pumpe (45) antreibenden elektrischen Motor (46), wobei die Pumpe (45) als Doppelmembranpumpe mit zwei gegenüberliegenden Arbeitsmembranen (43) vorgesehen ist, welche jeweils zwischen einem Pumpengehäuse (47) und einem Arbeitsraumdeckel (52) eingespannt ist und dadurch einen Arbeitsraum begrenzt und welche mittels eines Pleuelstangen (41,59) und Lager (38,60) aufweisenden Kurbelantriebs (53) bewegbar sind, wobei die Arbeitsmembran (43) mit einem Stößel (42) fest verbindbar ist und mit der Pleuelstange (41,59) jeweils eine Membraneinheit (40) bildet, **dadurch gekennzeichnet, dass** die Pleuelstangen (41,59) jeweils mit dem Stößel (42) einteilig ausgebildet und als Sinterbauteile vorgesehen sind.

5. Motor-Pumpenaggregat nach Anspruch 4, **dadurch gekennzeichnet, dass** als Lager ein Nadellager (44,60) vorgesehen wird, das in die Pleuelstange (41,59) eingepresst ist.

6. Motor-Pumpenaggregat nach einem der vorangegangenen Ansprüche, **dadurch gekennzeichnet, dass** das Pumpengehäuse (47) aus Kunststoff vorgesehen ist und zwischen dem Pumpengehäuse (47) und dem Motor (46) ein Motorblech (48) befestigt ist.

7. Motor-Pumpenaggregat nach Anspruch 6, **dadurch gekennzeichnet, dass** das Motorblech (48) Halteelemente (50) zur Befestigung des Motor-Pumpenaggregates am Fahrzeug aufweist.

8. Motor-Pumpenaggregat nach einem der vorangegangenen Ansprüche mit zwei am Pumpengehäuse (47) vorgesehenen Anschlüssen (51), wobei wahlweise ein Anschluss zum Verbinden der Pumpe (45) mit dem Bremskraftverstärker vorgesehen ist, **dadurch gekennzeichnet, dass** in einem der Anschlüsse (51) ein Vakuumsensor angeordnet ist.

9. Motor-Pumpenaggregat nach einem der vorangegangenen Ansprüche, **dadurch gekennzeichnet, dass** der Kurbelantrieb (53) einen scheibenförmigen Halter (54) sowie zwei an dem Halter (54) befestigte Wellen (55,56) aufweist, wobei die Wellen (55,56) an gegenüberliegenden Stirnflächen (57,58) des Halters (54) sowie versetzt zueinander angeordnet sind und die Pleuelstangen (59) mittels den Lagern (60) auf den Wellen (55,56) drehbar gelagert sind.

## Claims

1. Motor-pump unit, in particular for providing pressure for a brake actuating device of a motor vehicle brake system having a pneumatic brake booster, in particular a vacuum brake booster, comprising a pump (45) and an electric motor (46) driving the pump (45), the pump (45) being provided as a dual diaphragm pump having two opposed working diaphragms (39), each of which is clamped in between a pump casing (47) and a working chamber cover (52) and, as a result, delimits a working chamber, and which can be moved by means of a crank drive (53) having connecting rods (35, 59) and bearings (38, 60), it being possible for the working diaphragm (39) to be connected firmly to a tappet (36) and, together with the connecting rod (35, 59), in each case forming a diaphragm unit (34), **characterized in that** the connecting rods (35) are made of plastic, wherein in each case one tappet (36) and one bearing (38) are encapsulated with the material of the connecting rod (35).

2. Motor-pump unit according to Claim 1, **characterized in that** the connecting rod (35, 59) is made of a thermosetting plastic.

3. Motor-pump unit according to Claim 1 or 2, **characterized in that** the production of the working diaphragm (39, 59) is carried out by means of compression molding.

4. Motor-pump unit, in particular for providing pressure for a brake actuating device of a motor vehicle brake system having a pneumatic brake booster, in particular a vacuum brake booster, comprising a pump (45) and an electric motor (46) driving the pump (45), the pump (45) being provided as a dual diaphragm pump having two opposed working diaphragms (43), each of which is clamped in between a pump casing (47) and a working chamber cover (52) and, as a result, delimits a working chamber, and which can be moved by means of a crank drive (53) having connecting rods (41, 59) and bearings (38, 60), it being possible for the working diaphragm (43) to be connected firmly to a tappet (42) and, together with the connecting rod (41, 59), in each case forming a diaphragm unit (40), **characterized in that** the connecting rods (41, 59) are in each case formed in one piece with the tappet (42) and are provided as sintered components.

5. Motor-pump unit according to Claim 4, **characterized in that** the bearing provided is a needle bearing (44, 60), which is pressed into the connecting rod (41, 59).

6. Motor-pump unit according to one of the preceding claims, **characterized in that** the pump casing (47) is made of plastic and a motor plate (48) is fixed between the pump casing (47) and the motor (46).

7. Motor-pump unit according to Claim 6, **characterized in that** the motor plate (48) has retaining elements (50) for fixing the motor-pump unit to the vehicle.

8. Motor-pump unit according to one of the preceding claims having two connections (51) provided on the pump casing (47), one connection being provided to connect the pump (45) to the brake booster as desired, **characterized in that** a vacuum sensor is arranged in one of the connections (51).

9. Motor-pump unit according to one of the preceding claims, **characterized in that** the crank drive (53) has a disk-like holder (54) and two shafts (55, 56) fixed to the holder (54), wherein the shafts (55, 56) are arranged on opposite end faces (57, 58) of the holder (54) and offset with respect to each other, and the connecting rods (59) are rotatably mounted on the shafts (55, 56) by means of the bearings (60).

## Revendications

1. Ensemble de pompe-moteur, en particulier pour fournir de la pression à un dispositif d'actionnement de frein d'une installation de freinage d'un véhicule automobile, comprenant un servofrein pneumatique, en particulier un servofrein à vide, comprenant une pompe (45) et un moteur électrique (46) entraînant la pompe (45), la pompe (45) étant prévue sous forme de pompe à double membrane avec deux membranes de travail opposées (39), lesquelles sont à chaque fois serrées entre un boîtier de pompe (47) et un couvercle d'espace de travail (52) et délimitent ainsi un espace de travail et lesquelles peuvent être déplacées au moyen d'un entraînement à bielle (53) présentant des bielles (35, 59) et des paliers (38, 60), la membrane de travail (39) pouvant être connectée fixement à un poussoir (36) et formant avec la bielle (35, 59) à chaque fois une unité de membrane (34), **caractérisé en ce que** les bielles (35) sont fabriquées en plastique, un poussoir (36) et un palier (38) étant surmoulés à chaque fois avec le matériau de la bielle (35).

2. Ensemble de pompe-moteur selon la revendication 1, **caractérisé en ce que** la bielle (35, 59) est fabriquée en matériau thermodurcissable.

3. Ensemble de pompe-moteur selon la revendication 1 ou 2, **caractérisé en ce que** la fabrication de la membrane de travail (39, 59) s'effectue par moulage par compression.

4. Ensemble de pompe-moteur, en particulier pour fournir de la pression à un dispositif d'actionnement de frein d'une installation de freinage d'un véhicule automobile, comprenant un servofrein pneumatique, en particulier un servofrein à vide, comprenant une pompe (45) et un moteur électrique (46) entraînant la pompe (45), la pompe (45) étant prévue sous forme de pompe à double membrane avec deux membranes de travail opposées (43), lesquelles sont à chaque fois serrées entre un boîtier de pompe (47) et un couvercle d'espace de travail (52) et délimitent ainsi un espace de travail et lesquelles peuvent être déplacées au moyen d'un entraînement à bielle (53) présentant des bielles (41, 59) et des paliers (38, 60), la membrane de travail (43) pouvant être connectée fixement à un poussoir (42) et formant avec la bielle (41, 59) à chaque fois une unité de membrane (40), **caractérisé en ce que** les bielles (41, 59) sont réalisées à chaque fois d'une seule pièce avec le poussoir (42) et sont prévues sous forme de composant fritté.

5. Ensemble de pompe-moteur selon la revendication 4, **caractérisé en ce que** l'on prévoit comme paliers un palier à aiguilles (44, 60) qui est pressé à l'intérieur de la bielle (41, 59).

6. Ensemble de pompe-moteur selon l'une quelconque des revendications précédentes, **caractérisé en ce que** le boîtier de pompe (47) est fabriqué en plastique et une tôle de moteur (48) est fixée entre le boîtier de pompe (47) et le moteur (46).

7. Ensemble de pompe-moteur selon la revendication 6, **caractérisé en ce que** la tôle de moteur (48) présente des éléments de retenue (50) pour la fixation de l'ensemble de pompe-moteur sur le véhicule.

8. Ensemble de pompe-moteur selon l'une quelconque des revendications précédentes, comprenant deux raccords (51) prévus sur le boîtier de pompe (47), un raccord pour la connexion de la pompe (45) au servofrein étant prévus de manière sélective, **caractérisé en ce qu'**un capteur à vide est disposé dans l'un des raccords (51).

9. Ensemble de pompe-moteur selon l'une quelconque des revendications précédentes, **caractérisé en ce que** l'entraînement à bielle (53) présente un dispositif de retenue en forme de disque (54) ainsi que deux arbres (55, 56) fixés sur le dispositif de retenue (54), les arbres (55, 56) étant disposés de manière décalée l'un par rapport à l'autre sur des surfaces frontales opposées (57, 58) du dispositif de retenue (54) et les bielles (59) étant supportées à rotation au moyen des paliers (60) sur les arbres (55, 56).
